# EUROPEAN PATENT APPLICATION

(11) **EP 4 843 761 A1**
(43) Date of publication of application: **25.11.2026**
(21) Application number: 26172884.4
(22) Date of filing: 16.04.2026
(51) Int. Cl.: B29C 70/38, B29C 70/86

(54) **A METHOD OF MANUFACTURING A COMPOSITE PART**

(30) Priority: 23.05.2025 US 202563811287 P
(71) Applicant: Rohr Inc., Chula Vista, CA 91910-2098 (US)
(72) Inventor: CLANCY, Gearoid James, Cork (IE); GRAY, Nataniel M., Charlotte, North Carolina (US); URSENBACH, Daniel O., Chula Vista, California (US)
(74) Representative: Dehns

(57) **Abstract**

There is provided a method of manufacturing a composite part (106). The method comprises: positioning a woven fabric (112) onto a mould surface (104) of a tool (102); applying a resin (114) to the woven fabric to form a base layer (110) of the composite part; and forming a further layer (108) of the composite part (106) by placing and bonding strips of pre-impregnated fibres onto the base layer (110).

## Description

### TECHNICAL FIELD

This application relates to a method of manufacturing a composite part, a composite part manufactured by said method and a system for carrying out said method.

### BACKGROUND

A key technique in the manufacture of composite parts is the lay-up of individual layers of reinforcing fibers or fibre-reinforced material. This is particularly relevant to the field of aerospace engineering where the required parts are often large and comprise complex curvature. The lay-up process encompasses the placement of individual layers onto a tool surface whereby the arrangement, orientation and sequence of the layers is precisely controlled in order to achieve the required material characteristics. The adhesion of the first layer to the tool surface is particularly critical as sufficient adhesion is necessary to ensure defect-free placement, while also allowing for ease of removal of the final part from the tool surface. It is known to apply a physical barrier, such as a polyamide release film, to the tool surface to act as interface between the tool and the composite part. However, there are several issues with this approach - the application of the film to the tool surface is cumbersome; the film must be removed from the final part after removal from the tool as an additional step; the film must be able to withstand high temperatures (e.g. 400 °C); and the application of the film to complex, non-flat tool surfaces results in the formation of wrinkles which are subsequently imparted onto the final part.

### SUMMARY

According to an aspect of the disclosure, there is provided a method of manufacturing a composite part. The method comprises: positioning a woven fabric onto a mould surface of a tool; applying a resin to the woven fabric to form a base layer of the composite part; and forming a further layer of the composite part by placing and bonding strips of pre-impregnated fibres onto the base layer.

The base layer acts as an interface between the mould surface and the strips of pre-impregnated fibres forming the further layer. Without the provision of a base layer, the strips of pre-impregnated fibres may not reliably bond to the mould surface of the tool, particularly when the mould surface is metallic. When proper bonding of the strips of pre-impregnated fibres is not established, the quality of the lay-up is compromised.

The woven fabric provides a strong, flexible and/or conformable material for the formation of the base layer. The resultant base layer has sufficient structural stability and can be incorporated into the composite part without impacting performance. The base layer does not need to be removed from the composite part after formation thereof, resulting in reduced waste and need for post-processing. **In** other words, the base layer can serve as a first layer of the composite part. The base layer allows for the replacement of consumable parts such as release films in the manufacture of composite parts.

The method may further comprise forming a subsequent layer of the composite part by placing and bonding strips of pre-impregnated fibres onto the further layer of the composite part. Subsequent layers of the composite part may be formed by placing and bonding strips of pre-impregnated fibres onto a preceding layer.

The method may further comprise: consolidating the base layer into the composite part. The base layer may be consolidated into the composite part after subsequent layers of the composite part are formed by placing and bonding strips of pre-impregnated fibres onto the preceding layers. The base layer may be consolidated into the composite part after the one or more subsequent layers of the composite part have been formed. The base layer may be consolidated into the composite part in-situ during the forming of the further layer of the composite part by placing and bonding strips of pre-impregnated fibres onto the base layer.

The method may further comprise removing the base layer from the composite part. The base layer may be removed from the composite part after subsequent layers of the composite part are formed by placing and bonding strips of pre-impregnated fibres onto the preceding layers. The base layer may be removed from the composite part after the one or more subsequent layers of the composite part have been formed. Removing the base layer from the composite part may comprise machining off or peeling off the base layer.

The method may further comprise drawing a vacuum to hold the woven fabric against the mould surface after positioning the woven fabric onto the mould.

Applying the resin to the woven fabric to form the base layer may comprise: placing a film of resin onto the woven fabric; and applying heat to melt the resin so as to form the base layer.

The melted may further comprise applying a vacuum to draw the melted resin into the woven fabric.

The method may comprise sealing the film of resin to the mould surface via a vacuum tape prior to the application of vacuum to the woven layer.

Applying the resin to the woven fabric to form the base layer comprises at least one of: spraying the resin onto the woven fabric; and injecting the resin into the woven fabric.

Placing and bonding the strips of pre-impregnated fibres onto the base layer may comprise: heating the strips of pre-impregnated fibres and/or the base layer during placement. Placing and bonding the strips of pre-impregnated fibres onto the base layer may comprise: compacting the placed strips of pre-impregnated fibres after placement.

Placing and bonding the strips of pre-impregnated fibres onto the further layer or subsequent layer may comprise: heating the strips of pre-impregnated fibres and/or respective further layer or subsequent layer during placement. Placing and bonding the strips of pre-impregnated fibres onto the respective further layer or subsequent layer comprise: compacting the placed strips of pre-impregnated fibres after placement.

The strips of pre-impregnated fibres and/or base layer may be heated during placing of the fibers via a heater. The heater mat be one of a laser heater, hot gas torch or a pulsed light heater.

The strips of pre-impregnated fibres may be compacted after placement via a consolidation roller.

The consolidation roller and the heater may be provided on a placement head configured to automatically place strips of pre-impregnated fibres onto the mould surface.

The mould surface of the tool may be a doubly curved surface.

It will be appreciated that the woven fabric provides a flexible and/or conformable material, which can easily be conformed to doubly curved surfaces. The use of a woven fabric for the formation of the base layer ensures that the base layer will reliably conform to the mould surface without the formation of wrinkles that would otherwise be transferred to the further layer of the composite part resulting in defects.

The woven fabric may comprise at least one of carbon fibres, aramid fibres, or glass fibres. The pre-impregnated fibres may comprise at least one of carbon fibres, aramid fibres, or glass fibres. The pre-impregnated fibres may be pre-impregnated with a thermoplastic or a thermoset material. The resin may comprise a thermoplastic or a thermoset material.

Forming the further layer and/ or subsequent layer of the composite part may be via automated fiber placement or automated tape laying.

The method may further comprise forming a plurality of subsequent layers of the composite part via automated fibre placement or automated tape laying. The method may further comprise trimming the final part to shape. The method may further comprise removing the composite part from the mould surface. The composite part may be removed from the mould surface either before or after trimming the final part to shape.

According to a further aspect, there is provided a system configured to carry out the method described above. The system may comprise: a tool having a mould surface; and a placement head configured to automatically place strips of pre-impregnated fibres onto the mould surface.

The system may further comprise at least one heater. The system may further comprise at least one heater configured to melt the resin so as to form the base layer.

The system may further comprise at least one heater configured to heat the strips of pre-impregnated fibres and/or base layer during placement. The heater may be coupled to the placement head.

The system may further comprise a consolidation roller configured to compact the placed strips of pre-impregnated fibres after placement. The consolidation roller may be coupled to the placement head.

The system may comprise a means of applying a vacuum to the woven fabric. The tool may comprise a plurality of apertures extending to the mould surface through which the vacuum is applied.

The mould surface of the tool may be a doubly curved surface.

The system may be configured to form the further layer and subsequent layers of the composite part via automated fiber placement or automated tape laying.

According to a further aspect, there is provided a composite part formed by the method described above.

The composite part may comprise a plurality of layers. The plurality of layers may comprise a base layer. The base layer may comprise a woven fabric embedded in a resin material.

The base layer may differ in composition from the remaining layers in the plurality of layers. The base layer may differ in respect of at least one of the materials of the fibre reinforcements, the material of the resin, and the arrangement of the fibres.

The base layer may comprise at least one of carbon fibres, aramid fibres, or glass fibres. The base layer may comprise a thermoplastic or a thermoset material.

At least one of the remaining layers of the plurality of layers may comprise at least one of carbon fibres, aramid fibres, or glass fibres. At least one of the remaining layers of the plurality of layers may comprise a thermoplastic or a thermoset material.

### BRIEF DESRIPTION OF THE DRAWINGS

Certain examples of the disclosure will now be described by way of example only and with reference to the accompanying drawings in which:
FIG. 1 is a flowchart illustrating a method of manufacturing a composite part according to an example of the disclosure.
FIG. 2 is a schematic illustration of part of an example system for carrying out the method of manufacturing of FIG. 1.
FIG. 3 is a schematic illustration of an example tool for the method of manufacturing of FIG. 1; and
FIG. 4 is a schematic illustration of part of an example system for carrying out the method of manufacturing of FIG. 1.

### DETAILED DESCRIPTION

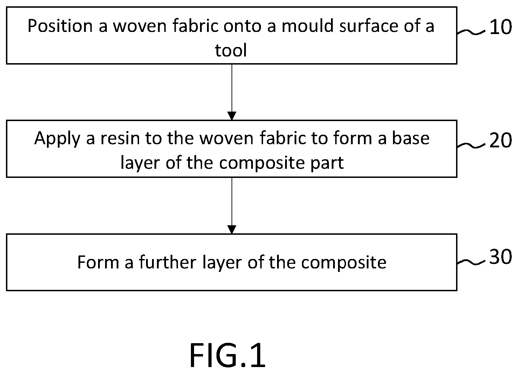

A method of manufacturing a composite part is show in FIG. 1. A woven fabric is positioned onto a mould surface of a tool (step 10). A resin is applied to the woven fabric to form a base layer of the composite part (step 20). A further layer of the composite part is then formed by placing and bonding strips of pre-impregnated fibres onto the base layer (step 30).

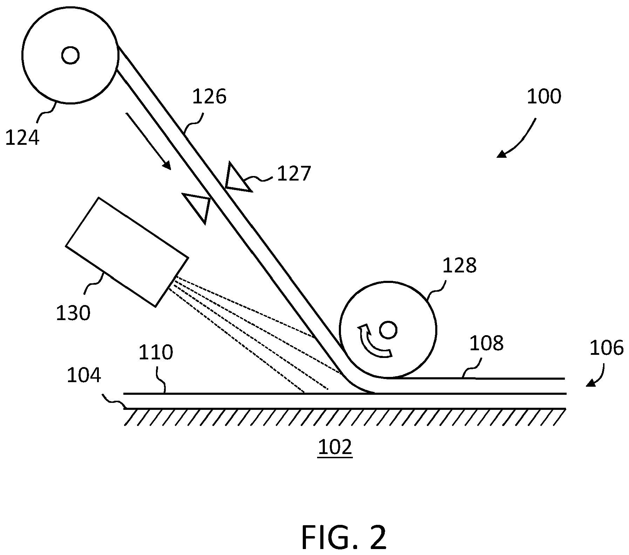

With reference to FIG. 2, 3 and 4, an example system 100 is provided. The system 100 is configured to carry out the method of FIG. 1. While the method of FIG. 1 is herewith described with reference to the system 100, the method is not limited to being carried out by the system 100.

The system 100 comprises a tool 102 having a tool surface 104, hereinafter referred to as a "mould surface". A composite part 106 is manufactured by placing layers in sequence onto the mould surface 104. FIG. 2 shows a layer 108 of the composite part 106 being placed. The layer 108 is shown as being placed onto a base layer 110.

The mould surface 104 may be made of metallic material. The shape of the mould surface 104 defines the shape of the layers of the composite part 106 placed onto it. The mould surface 104 may have a complex shape depending on the required design of the composite part 106 to be manufactured.

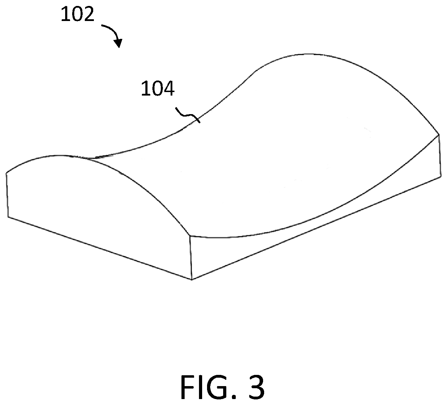

FIG. 3 shows an example tool 102 having a doubly curved mould surface 104. In contrast to singly curved or "developable" surfaces, doubly curved surfaces cannot be flattened onto a plane without distortion. The use of doubly curved mould surfaces is required for the manufacture of many aerospace components, such as various sections of the fuselage skin of an aircraft.

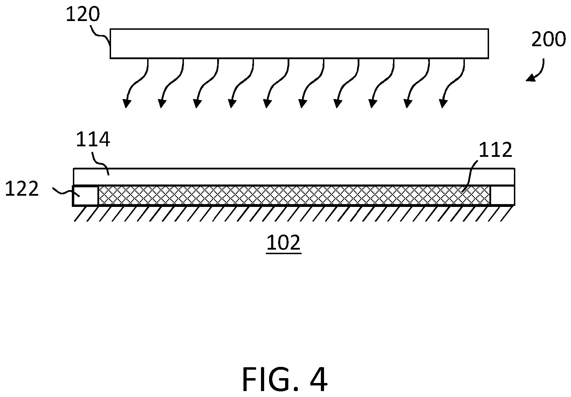

In step 10 of the method of manufacturing a composite part, a woven fabric 112 is positioned onto the mould surface 104 of the tool 102 as shown in FIG. 4. The woven fabric 112 may be positioned by hand. The woven fabric 112 may be conformed to the mould surface 104. For example, the woven fabric 112 may be stretched over the mould surface 104. The woven fabric 112 comprises fibres interweaved in a pattern to form a fabric. In an example, the woven fabric may comprise "warp" fibres interweaved with "weft" fibres whereby the warp fibres are offset at a 90° angle from the weft fibres. However, various orientations and arrangements of the fibres are possible. In examples, the woven fabric may be weaved, braided or knitted in a desired pattern. The fibres of the woven fabric 112 may comprise any high-strength fibres suitable for engineering applications. For example, the woven fabric 112 may comprise carbon, glass, graphite or aramid fibres or a combination thereof. The woven fabric 112 is provided as a dry composite fabric. In other words, the woven fabric is free of resin material. The woven fabric 112 may be held against the mould surface 104 via the application of vacuum. In examples, the tool 102 comprises a plurality of apertures (not shown) extending to the mould surface 104 through which the vacuum is applied. In other examples, the woven fabric 112 may be held against the mould surface 104 via a fixture, such as a clamping mechanism.

In step 20 of the method of manufacturing a composite part, a resin 114 is applied to the woven fabric 112 to form a base layer 110 of the composite part 106. The resin 114 may bond to the fibres of the woven fabric 112 to form the base layer 110. The resin 114 may comprise a thermoplastic or thermoset material. Examples of a thermoplastic material include, but are not limited to polyether ether ketone (PEEK). Examples of a thermoset material include, but are not limited to epoxy resin.

In some examples, the resin 114 is provided as a film of resin material. The film of resin material is placed onto the woven fabric 114. Heat 200 may be applied to melt the resin 114 into the woven fabric 112 so as to form the base layer 110. The heat 200 may be applied by one or more heaters 120, such as infrared heaters. The heaters 120 may be positioned above the mould surface 104. The heaters 120 may be moveable in respect of the mould surface 104.

In examples, the melted resin 112 may be drawn into the woven fabric 114 under the application of vacuum. In examples, the tool 102 comprises a plurality of apertures (not show) extending to the mould surface 104 through which the vacuum is applied. The edges of the film of resin may be sealed as or after the film is placed onto the woven fabric 114. For example, the film of resin may be sealed against the mould surface 104 via vacuum tape 122. The vacuum tape 122 may be applied along the edges of the film or resin. In other examples, the resin 114 may be sprayed or injected onto the woven fibre 112 to form the base layer 110.

The base layer 110 may act as the foundation layer of the composite part 106. The base layer 110 may form part of the composite part 106. In other words, the base layer 110 may comprise a first layer of the composite part 106.

A further layer 108 of the composite part 106 is then formed onto the base layer 110 (step 30), for example as shown in FIG. 2. The further layer 108 is formed by placing and bonding strips of pre-impregnated fibres onto the base layer 110. Forming subsequent layers of the composite part 106 is achieved by placing and bonding strips of pre-impregnated fibres onto the further layer and then onto respective preceding layers. The base layer 110 may be continuously held against the mould surface 104 via the application of vacuum during formation of the further layer 108 and the subsequent layers. The further layer 108 (and subsequent layers) is formed by a plurality of individual strips of pre-impregnated material. Each strip of the plurality of individual strips may partially overlap an adjacent strip to form the respective layer.

The strips of pre-impregnated fibres comprise bands of fibre-reinforced material. The strips comprise woven or non-woven fibres, pre-impregnated with resin material. The resin material may comprise thermoplastic or thermoset material. Examples of a thermoplastic material include, but are not limited to polyether ether ketone (PEEK). In examples, the strips of pre-impregnated fibres may be substantially dry and pre-impregnated only with a small amount of binder material so as to prevent dislodging of the fibres during placement. Examples of a thermoset material include, but are not limited to epoxy resin. The strips of pre-impregnated fibres may comprise any high-strength fibres suitable for engineering applications. For example, the strips of pre-impregnated fibres may comprise carbon, glass, graphite or aramid fibres or a combination thereof. **In** examples, some or all of the strips of pre-impregnated fibres may comprise the same resin and/or fibre material as the base layer 110.

The strips can be provided as a continuous tow of material, which is cut to the required length during placement. The placement of the strips may be achieved manually. However, in the present example, the further layer 108 and any subsequent layers of the composite part 106 are placed automatically, for example via automated fiber placement or automated tape laying. The placing and bonding of strips of pre-impregnated fibres via automated fibre placement will now be described with reference to FIG. 2. Automated tape laying is a further process of placing and bonding strips of pre-impregnated fibres. Automated tape laying is similar to automated fibre placement, a key difference being the width of the strips of pre-impregnated fibres used. The strips of pre-impregnated fibres may also be called "tapes" or "tows" depending on the placement process used.

In automated fiber placement, a placement head (not shown) is configured to automatically place the strips of pre-impregnated fibres onto the mould surface 104. The placement head may be provided on a robotic arm or a gantry system. The robotic arm or gantry system may be configured to move the placement head along and across the mould surface 104. The placement head is moved in a predetermined path or in a predetermined sequence of paths so as to form the layers of the composite part 106.

The pre-impregnated fibres are continuously fed to the placement head from a spool 124 of pre-impregnated fibre material 126. The pre-impregnated fibre material 126 comprises a continuous tow of pre-impregnated fibres. The placement head unwinds the spool 124 of pre-impregnated fibre material 126 and guides the pre-impregnated fibre material 126 to the mould surface 104. Once a desired length of pre-impregnated fibre material 126 is placed onto the mould surface 104, the placement head is configured to cut the pre-impregnated fibre material 126 so as to form a strip of pre-impregnated fibres. The strip of pre-impregnated fibre placed forms a part of a layer of the composite part 106. The placement head may comprises cutters 127 for cutting the pre-impregnated fibre material 126. Once a strip of pre-impregnated fibre is placed and cut to the desired length, the placement head moves to another location on the mould surface 104 and begins the process of placing another strip of pre-impregnated material. The placement head is configured to control the speed at which the pre-impregnated fibre material 126 is unravelled and to tension the feed of pre-impregnated fibre material 126. The placement head may be coupled to the spool 124.

In the example shown. the placement head further comprises a consolidation roller 128. The consolidation roller 128 compacts the strips of pre-impregnated fibres as these are placed onto the mould surface 104. This ensures that the strips of pre-impregnated fibres are properly bonded to the respective base layer 110 or preceding layer of the composite part 106.

During placement, the strips of pre-impregnated fibres are heated in order to bond the strips to the respective base layer 110 or preceding layer of the composite part 106. In examples, the strips of pre-impregnated fibres may be placed so as to partially overlap and bond to one or more adjacent strips of pre-impregnated fibres forming the respective layer. In the example shown, heat is supplied by a heater 130 coupled to the placement head. The heater 130 moves with the placement head. The heater 130 may be one of a laser heater, hot gas torch or a pulsed light heater. The heater 130 applies localised heat. The heater 130 heats the strips of pre-impregnated fibres immediately prior to and/or during placement of the pre-impregnated fibres. Additionally or alternatively, the heater 130 heats the respective base layer 110 or preceding layer immediately prior to and/or during placement of the pre-impregnated fibres.

In examples, the strips of pre-impregnated fibres are consolidated in-situ during placement under the application of heat and pressure. For example, the strips of pre-impregnated fibres are consolidated in-situ under the application of heat via the heater 130 and the application of pressure via the consolidation roller 128. In examples, further consolidation of the composite part may be carried out once the composite part 106 is fully formed. In examples, the base layer 110 is consolidated into the composite part 106 once the composite part 106 is fully formed.

Once the composite part 106 is fully formed, it is removed from the tool 104. The composite part 106 may undergo further processes as needed. For example, further processes may include trimming, machining, curing or consolidation of the composite part 106. In examples, the base layer 110 may be removed from the composite part 106. The base layer 110 may be machined off or peeled off.

In a set of examples, the resin 114 applied to the woven fabric 112 to form the base layer 110 (in step 20) may not be bonded to the fibres of the woven fabric 112. In this set of examples, the resin 114 is not melted into the woven fabric 112 but is held against the woven fabric 112 under the application of vacuum. In this set of examples, the resin 114 may comprise a film placed onto the woven fabric 112 in discrete sections so as to minimise the formation of wrinkles. The film may be a polyimide film (e.g. Kapton^{™}). In this set of examples, the base layer 110 comprises the woven fabric 112 and the resin 114 as separate layers. In this set of examples, the further layer 108 of the composite part 106 may be formed onto the film of resin 114 of the base layer 110. In this set of examples, the removal of the base layer 110 from the composite part 106 is facilitated. Once the composite part 106 is formed and the application of vacuum holding the resin 114 against the woven fabric 112 is ceased, the woven fabric 112 may be separated from the resin 114 and the subsequent layers of the composite part. Removal of the base layer 110 from the composite part, may further comprise peeling off the resin 114 from the further layer(s) of the composite part 106. As the woven fabric 112 is maintained free of resin material, it may be reused in the formation of further composite parts.

As used herein, the terms "bond" and "bonding" should be understood to mean the act of bonding, joining, fusing and/or adhering of one component (for example, a strip or a layer) to another.

While the disclosure has been described in detail in connection with only a limited number of examples, it should be readily understood that the disclosure is not limited to such disclosed examples. Rather, the disclosure can be modified to incorporate any number of variations, alterations, substitutions or equivalent arrangements not heretofore described, but which are commensurate with the scope of disclosure. Additionally, while various examples of the disclosure have been described, it is to be understood that aspects of the disclosure may include only some of the described examples. Accordingly, the disclosure is not to be seen as limited by the foregoing description, but is only limited by the scope of the appended claims.

## Claims

1. A method of manufacturing a composite part, the method comprising:
positioning a woven fabric onto a mould surface of a tool;
applying a resin to the woven fabric to form a base layer of the composite part; and
forming a further layer of the composite part by placing and bonding strips of pre-impregnated fibres onto the base layer.

2. The method of claim 1, further comprising:
forming a subsequent layer of the composite part by placing and bonding strips of pre-impregnated fibres onto the further layer of the composite part; and, optionally, forming one or more subsequent layers of the composite part by placing and bonding strips of pre-impregnated fibres onto a preceding layer.

3. The method of claim 1 or 2, further comprising:
consolidating the base layer into the composite part.

4. The method of claim 1 or 2, further comprising
removing the base layer from the composite part.

5. The method of any preceding claim, further comprising:
drawing a vacuum to hold the woven fabric against the mould surface after positioning the woven fabric onto the mould.

6. The method of any preceding claim, wherein applying the resin to the woven fabric to form the base layer comprises:
placing a film of resin onto the woven fabric; and
applying heat to melt the resin so as to form the base layer.

7. The method of claim 6, further comprising applying a vacuum to draw the melted resin into the woven fabric.

8. The method of any of claims 1 to 5, wherein applying the resin to the woven fabric to form the base layer comprises at least one of:
spraying the resin onto the woven fabric; and
injecting the resin into the woven fabric.

9. The method of any preceding claim, wherein placing and bonding the strips of pre-impregnated fibres onto the base layer comprises:
heating the strips of pre-impregnated fibres and/or the base layer during placement; and/or
compacting the placed strips of pre-impregnated fibres after placement.

10. The method of any preceding claim, wherein the mould surface of the tool is a doubly curved surface.

11. The method of any preceding claim, wherein the woven fabric and/or the pre-impregnated fibres comprises at least one of carbon fibres, aramid fibres, or glass fibres.

12. The method of any preceding claim, wherein the pre-impregnated fibres are pre-impregnated with a thermoplastic or a thermoset material; and / or
wherein the resin comprises a thermoplastic or a thermoset material.

13. The method of any preceding claim, wherein forming the further layer and / or subsequent layer(s) of the composite part is via automated fiber placement or automated tape laying.

14. A system configured to carry out the method of any preceding claim, comprising:
a tool having a mould surface; and
a placement head configured to automatically place strips of pre-impregnated fibres onto the mould surface.

15. A composite part formed by the method of any preceding claim.
